# EUROPEAN PATENT APPLICATION

(11) **EP 1 783 607 A1**
(43) Date of publication of application: **09.05.2007**
(21) Application number: 05758331.2
(22) Date of filing: 07.07.2005
(51) Int. Cl.: G06F 9/48, G06F 9/445, H04M 1/00

(54) **COMPETITION SOLVING DEVICE**

(30) Priority: 28.07.2004 JP 2004219734
(71) Applicant: MATSUSHITA ELECTRIC INDUSTRIAL CO., LTD., Osaka 571-8501 (JP)
(72) Inventor: INAMI, Satoshi Mats. Elect. Ind. Co., Ltd., IPROC, Chuo-ku, Osaka-shi, Osaka 540-6319 (JP); KAWANO, Masakazu Mat. Elect. Ind. Co., Ltd., IPROC, Chuo-ku, Osaka-shi, Osaka 540-6319 (JP)
(74) Representative: Pautex Schneider, Nicole Véronique
(86) International application number: PCT/JP2005/012554
(87) International publication number: WO 2006/011343

(57) **Abstract**

The present invention aims to provide a conflict resolution apparatus for appropriately resolving a conflict between programs without holding large amount of information necessary for resolving the conflict between the newly added program and other programs.

The conflict resolution apparatus of the present invention resolves a conflict between programs, including: a conflict information storage unit (16) for storing a conflict information table indicating a conflict relationship according to a combination of first attributes of the programs; an update unit (13) which updates the conflict information table stored in the conflict information storage unit (16), using the conflict information received by the data receiving unit (11); a determination unit (15) which determines whether or not to permit start-up of a program to be started, using the conflict information table updated by the update unit (13) based on a combination of types of the program to be started and the program which is currently in operation; and an operation control unit (18) which controls an operation of the program which is currently in operation or an operation of the program to be started, based on the determination result obtained by the determination unit (15).

## Description

### Technical Field

The present invention relates to a conflict resolution apparatus which resolves conflicts between programs.

### Background Art

Conventionally, in information communication devices such as cellular phones, there are cases in which a specific application program is preferentially executed over other application programs in order to resolve conflicts between the programs. For example, when there is a phone call, an application program for providing a telephone function to a user (hereinafter, referred to as "telephone application") displays an incoming call screen and triggers a ring tone for the incoming call, even in the case where contents are displayed on a web browser.

This is because, for cellular phones, the process for the incoming call always has to be prioritized- so as to allow a telephone conversation, when there is a phone call.

Thus, in systems such as in cellular phones, priority levels are set for all application programs installed in the system and the setting details are stored in the cellular phone, before the cellular phone is shipped as a product. Furthermore, the cellular phone is shipped, having been tested beforehand so that the cellular phone system operates in accordance with the stored priority levels.

In recent years, a user can install new applications into a system after purchasing the cellular phone, for example, by downloading a JAVA^{™} application program and installing it to the cellular phone. This allows the functions of the cellular phone to be expanded.

For example, in the case where the added JAVA^{™} application program and other application programs which are conventionally installed, such as a telephone application, operate at the same time, the operation is performed while adjusting the priority levels among the application programs. In other words, conflicts are resolved by controlling the application programs in such a way that an application program with a higher priority level performs a predetermined operation so that operations of the respective application programs are not conflict with each other.

For the JAVA^{™} application program, its software configuration to be controlled is different from the configuration of the already-installed program. However, the fundamental mechanism to be controlled is the same as that of the already-installed program. Specifically, the JAVA^{™} application program installed by a user after shipment adopts, as its own priority level, a predetermined priority level set in the already-installed JAVA^{™} base application program. Based on the priority level, operations are adjusted between the application program installed after the shipment and the application programs installed before the shipment. Accordingly, the cellular phone can operate consistently as a system.

There have been methods of preferentially operating a specific application such as a method of determining whether or not a newly requested operation can be executed, with reference to a conflict control table in which conflict rules among applications are described (for example, refer to Patent Reference 1).
Patent Reference 1: Japanese Laid-Open Patent Application No. 11-331157

### Disclosure of Invention

### Problems that Invention is to Solve

However, with the conventional technology, in the case
where an application program is newly installed in a system such as cellular phones, the new application program operates the pre-existing application program, which has been installed previously in the system, depending only on the certain priority level.

Accordingly, in the case where the pre-existing application is being operated, the new application program cannot be started despite the type of the features of the new application program. Or conversely, the new application program may always be started. Furthermore, the same applies to the new application programs.

For example, in the cellular phones, in the case where a pre-existing game application program is being operated, a new application program for sounding an alarm at a predetermined time cannot be started or operated, and a situation in which the alarm cannot be sounded may arise. Such an inappropriate conflict resolution method is inconvenient for the user.

Here, it is possible to prepare a control table in which conflict rules are registered within an expected range for the application programs that operate previously in the system, so that the system can operate consistently corresponding to the application programs. However, in the case where the application program having an unexpected conflict rule is installed, the system cannot correspond to such application program. Furthermore, although it is suggested to register as many conflict rules as possible in the previously prepared control table so as to correspond to various cases, it is not realistic because the file size of the control table becomes enormous.

The present invention is conceived in view of the aforementioned problems, and has an object to provide a conflict resolution apparatus which aims to appropriately resolve conflicts between programs, in a system capable of operating an added program, without storing large amount of information for resolving the conflicts between the newly added program and other programs.

### Means to Solve the Problems

In order to achieve the aforementioned object, the conflict resolution apparatus of the present invention is a conflict resolution apparatus which resolves a conflict between programs, the apparatus including: a first determination table storage unit for storing a first determination table indicating a conflict relationship according to a combination of first attributes of the programs; a priority level information receiving unit which receives priority level information indicating a priority level of each program, the priority level being specified by the first attribute of the program; an update unit which updates the first determination table stored in the first determination table storage unit, using the priority level information received by the priority level information receiving unit; a determination unit which determines whether or not to permit start-up of a program to be started, using the first determination table updated by the update unit, based on a combination of a first attribute of the program to be started and a first attribute of a program which is currently in operation; and a control unit which controls an operation of the program which is currently in operation or an operation of the program to be started, according to a determination result obtained by the determination unit.

Accordingly, the conflict resolution apparatus of the present invention can appropriately resolve the conflict which occurs between a new program and other programs using updated information because it can update the information indicating the conflict relationship even after the shipment.

Furthermore, the present invention can be also realized as a method having characteristic constituent elements of the conflict resolution apparatus of the present invention as steps, as well as a program including such steps, a recording medium such as a CD-ROM in which the program is stored, or as an integrated circuit. The program can be distributed via a transmission medium such as a communication network.

### Effects of the Invention

The present invention can provide a conflict resolution apparatus for appropriately resolving conflicts between programs without storing large amount of information for resolving conflicts between a newly added program and other programs, in a system which can operate the newly added program.

The conflict resolution apparatus according to the present invention can appropriately resolve conflicts between a new program and other programs by updating a first determination table, even in the case where, for example, a program, which has a conflict rule which is information for a conflict resolution and is an unexpected rule at the time of shipment, is installed after the program is shipped once as a system. Furthermore, since the first determination table can be updated, a large amount of information does not need to be stored into the first determination table beforehand so that the first determination table can be kept in minimum and optimum conditions. Accordingly, the storage region in the storage unit for storing the first determination table can be deleted.

### Brief Description of Drawings

FIG. 1 is a diagram showing a configuration of an entire system including a conflict resolution apparatus according to a first embodiment of the present invention.
FIG. 2 is a diagram showing an example of a data configuration in a type information table stored in a type information storage unit.
FIG. 3 is a diagram showing an example of a data configuration in a conflict information table stored in a conflict information storage unit.
FIG. 4 is a flowchart showing a flow of conflict resolution processes performed by the conflict resolution apparatus when starting up an application program, according to the first embodiment.
FIG. 5 is a diagram showing an example of a data configuration of operation information stored in the operation information storage unit according to the first embodiment.
FIG. 6 is a flowchart showing a flow of processes performed, when the type information table and the conflict information table are updated, by the conflict resolution apparatus according to the first embodiment.
FIG. 7 is a diagram showing an example of a data configuration of install data according to the first embodiment.
FIG. 8 is a diagram showing an example of the conflict information.
FIG. 9 is a diagram showing an example of the updated conflict information table.
FIG. 10 is a diagram showing another example of the conflict information.
FIG. 11 is a diagram showing another example of the updated conflict information table.
FIG. 12 is a diagram showing a configuration of an entire system including a conflict resolution apparatus according to a second embodiment of the present invention.
FIG. 13 is a diagram showing an example of a conflict information table of the conflict resolution apparatus according to the second embodiment.
FIG. 14 is a diagram showing an example of a data configuration of an exception information table.
FIG. 15 is a flowchart showing a flow of processes performed by the conflict resolution apparatus when starting up an application program, according to the second embodiment.
FIG. 16 is a diagram showing an example of a data configuration of operation information stored in an operation information storage unit according to the second embodiment.
FIG. 17 is a diagram showing an example of a data configuration of install data according to the second embodiment.
FIG. 18 is a diagram showing an example of the exception information.
FIG. 19 is a diagram showing an example of a data configuration of the updated exception information table.

### Numerical References

- 10, 20: conflict resolution apparatus
- 11: data receiving unit
- 12: application storage unit
- 13: update unit
- 14: type information storage unit
- 15: determination unit
- 16: conflict information storage unit
- 17, 19: operation information storage unit
- 18: operation control unit
- 21: server
- 22: supply data storage unit
- 25: exception information storage unit
- 30: network
- 100: terminal apparatus

### Best Mode for Carrying Out the Invention

Embodiments of the present invention shall be explained hereinafter with reference to the drawings.

### (First Embodiment)

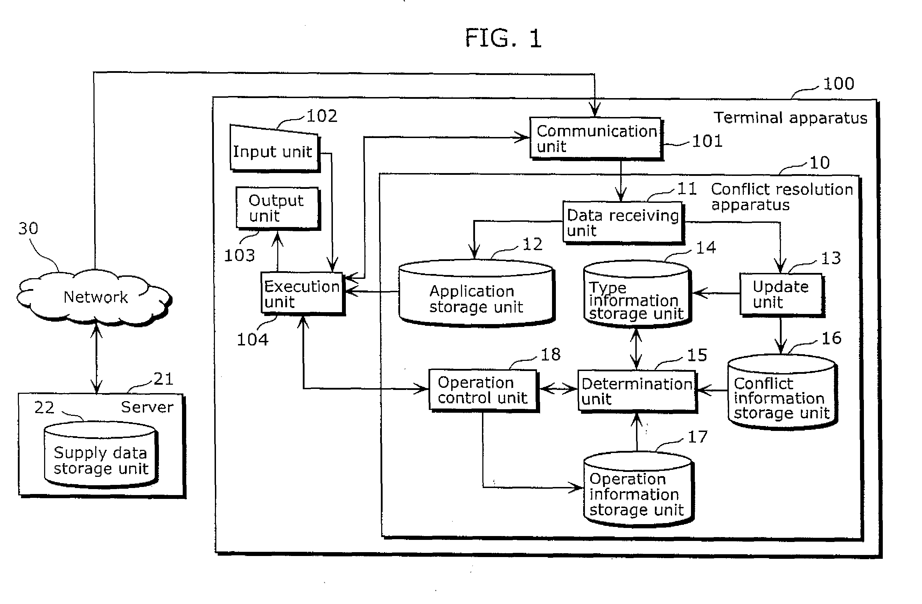

First, with reference to FIG. 1 to FIG. 4, the configuration of a conflict resolution apparatus according to the first embodiment of the present invention is described.

FIG. 1 is a diagram showing a configuration of an entire system including the conflict resolution apparatus according to the first embodiment of the present invention.

The system of the present embodiment includes a terminal apparatus 100 and a server 21. The server 21 is connected to the terminal apparatus 100 via a network 30.

The terminal apparatus 100 is a terminal apparatus which can execute an application program, and is realized as a cellular phone for example. As shown in FIG. 1, the terminal apparatus 100 includes a communication unit 101, an input unit 102, an output unit 103, an execution unit 104 and a conflict resolution apparatus 10.

The communication unit 101 is a processing unit which exchanges data with the server 21 via the network 30. The execution unit 104 is a processing unit which executes an application program. The input unit 102 is an input key and the like for a user to input an instruction and the like to the terminal apparatus 100. The output unit 103 is a display apparatus and a speaker which output an execution result of the application program executed by the execution unit 104. The user can perceive the execution result of the application program from an image or audio via the output unit 103.

The conflict resolution apparatus 10 is an apparatus which controls the plural application programs, in the case where the plural application programs are operated at the same time in the terminal apparatus 100, so that the operations of the plural application programs do not conflict with each other.

As shown in FIG. 1, the conflict resolution apparatus 10 includes a data receiving unit 11, an application storage unit 12, an update unit 13, a type information storage unit 14, a determination unit 15, a conflict information storage unit 16 and an operation information storage unit 17.

The data receiving unit 11 is a processing unit which receives data transmitted from the server 21 via the communication unit 101. The data receiving unit 11 stores the application program included in the received data into the application storage unit 12, and transmits other information to the update unit 13.

It should be noted that the data receiving unit 11 realizes a function of receiving information respectively held by the priority level information receiving unit and the program receiving unit, in the conflict resolution apparatus of the present invention. Furthermore, the function of obtaining attribute information of a program by the attribute information obtaining unit is realized. Here, the application storage unit 12 is an example of a program storage unit in the conflict resolution apparatus of the present invention.

The application storage unit 12 is a storage device for storing application programs. For example, it is realized as a Random Access Memory (RAM), a Hard Disk Drive (HDD) or the like. It should be noted that storage units, which are described hereinafter, are similarly realized by these recording media.

The update unit 13 is an example of the update unit in the conflict resolution apparatus of the present invention, and is a processing unit which updates information stored in the conflict information storage unit 16 or the type information storage unit 14 using the information received from the data receiving unit 11.

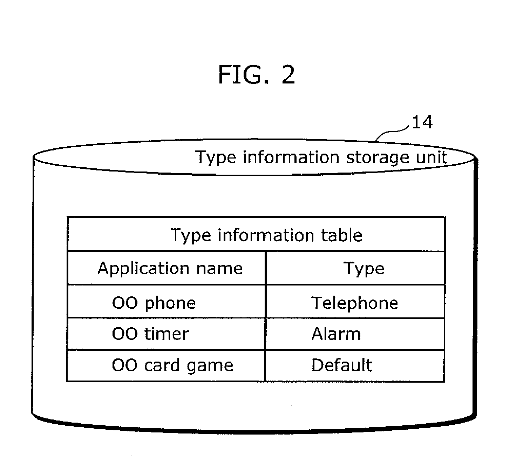

The type information storage unit 14 is an example of the attribute information storage unit in the conflict resolution apparatus of the present invention, and is a storage device for storing the type information indicating a type of an application program. The type information shall be described later with reference to FIG. 2.

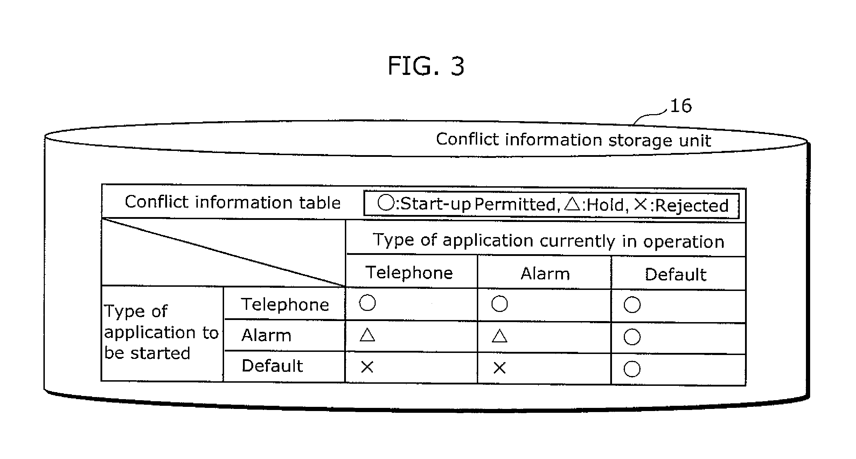

The conflict information storage unit 16 is a storage device for storing a conflict information table which is a table indicating a conflict relationship among the plural application programs. The conflict information table shall be described later with reference to FIG. 3. Note that, the conflict information table is an example of a first determination table in the conflict resolution apparatus of the present invention, and the conflict information storage unit 16 is an example of the first determination table storage unit in the conflict resolution apparatus of the present invention.

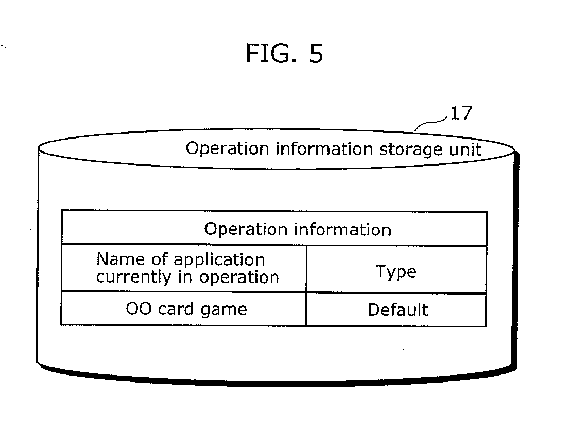

The operation information storage unit 17 is a storage device for storing operation information which is information relating to an application program which is currently in operation. The operation information shall be described later with reference to FIG. 5. Here, the state of the application program which is currently "in operation" includes not only the case in which video and audio are actually being outputted due to the operation of the application program, but also the case in which the application program is not being operated virtually while waiting to receive an input or an instruction from a user and the like. Such state of "in operation" is also referred to as that the application program is currently "being activated".

The determination unit 15 is an example of the determination unit in the conflict resolution apparatus of the present invention, and is a processing unit which determines, in response to the request from the operation control unit 18, what operations should be taken by the application program which is currently in operation and the application program to be started. This determination is also referred to as "conflict determination". The aforementioned type information, operation information and conflict information are used for the conflict determination.

The operation control unit 18 is an example of a control unit in the conflict resolution apparatus of the present invention, and is a processing unit which controls the operations of the application program which is currently in operation and the application program to be started, based on the determination result obtained by the determination unit 15.

The network 30 applies to, for example, the Internet, an intranet or the like, and is a communication network having one or both of a wired circuit and a wireless circuit.

The server 21 is a computer which provides an application program to the terminal apparatus 100 via the network 30.

The server 21 includes a supply data storage unit 22. The supply data storage unit 22 is a storage device for storing install data to be transmitted to the terminal apparatus 100. The install data is data which includes an application program and information regarding the application program. The server 21 provides the application program to the terminal apparatus 100 by transmitting the install data to the terminal apparatus 100.

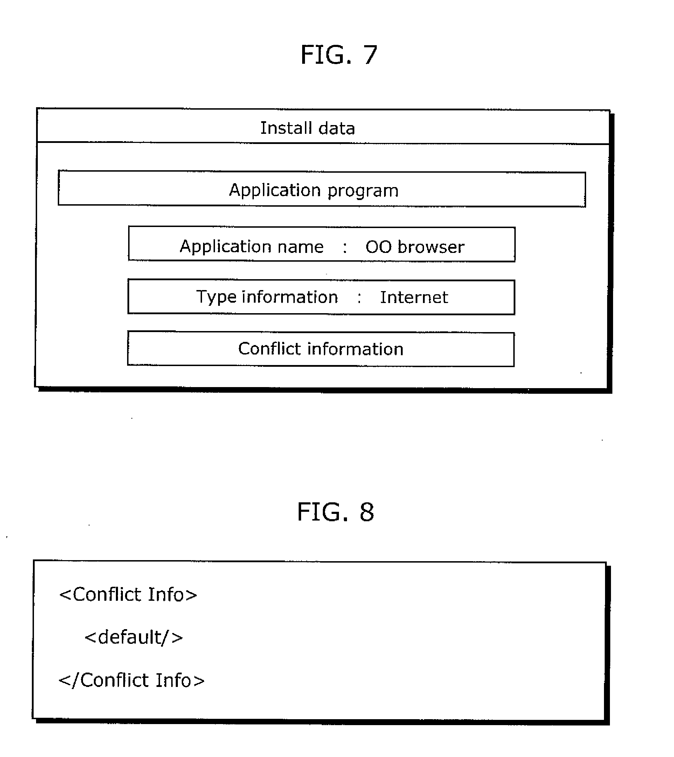

Note that, the install data is transmitted, to the terminal apparatus 100, triggered by a request from the terminal apparatus 100 or a spontaneous operation of the server 21. The data configuration and the like of the install data are described later with reference to FIG. 7.

Furthermore, whereas the terminal apparatus 100 or the conflict resolution apparatus 10 includes resources such as a mechanism for synthesizing alarm sound, a software and the like, the detailed explanation about such resources is omitted in the diagram in order to simplify the explanation of the conflict resolution apparatus in the present invention.

FIG. 2 is a diagram which shows an example of a data configuration in the type information table stored in the type information storage unit 14. The type information table is a table showing types of plural application programs stored in the application storage unit 12. Note that, the type of an application program is one example of a first attribute of the conflict resolution apparatus of the present invention.

As shown in FIG. 2, the type information table includes an application name and a type as data items. The application name is a name of an application program stored in the application storage unit 12. The application name is used as an identifier so that plural application programs stored in the application storage unit 12 are uniquely identified by the respective application names.

The type is a name of a type determined based on an operation purpose, operation feature and the like of an application program, and is determined by a provider of each application program. For example, an application program such as an e-mail client who exchanges information through the Internet has a type called "Internet".

The type called "Telephone" is a type indicating an application program for providing a user a telephone function such as a control of audio signal for communication. The type called "Alarm" is a type indicating an application program which mainly aims to operate a process of sounding an alarm. Furthermore, the type called "Default" is a type assigned to an application program whose type has not yet been determined. In other words, the application program whose type has not yet been determined by the provider of the application program is considered to have the type "Default".

When a new application program is stored into the application storage unit 12, the details of the type information table are updated by the update unit 13. The type information necessary for the update is included in the install data received by the data receiving unit 11. Note that, as described in the above, in the case
where the install data does not include the information indicating a type, the type "Default" is assigned to the current application program by the update unit 13.

FIG. 3 is a diagram showing an example of a data configuration of the conflict information table stored in the conflict information storage unit 16. The conflict information table is a table that is updated based on the conflict information which identifies a conflict relationship among the plural application programs stored in the application storage unit 12. The conflict information is transmitted from the server 21 in a manner that the conflict information is included in the install data together with the application program. Note that, the conflict information is an example of priority level information for the conflict resolution apparatus of the present invention.

As shown in FIG. 3, in the conflict information table, operations of the application program which is currently in operation and the application program to be started are identified by a symbol indicated at an intersection of the application type of the application program which is currently in operation in the horizontal direction and the type of the application program to be started in the vertical direction.

The symbol "O (circle)" in the conflict information table indicates that the start-up of the application program requested to be started is permitted. For example, in this case, the operation of the application program which is currently in operation is stopped.

Further, the symbol "Δ (triangle)" indicates that the start-up of the application program requested to be started is put on hold. Specifically, it indicates that said start is permitted after the operation of the application program which is currently in operation is stopped not by a control by the operation control unit 18 but by an instruction from a user or the like. In other words, "Hold" is one form of start permission. Furthermore, the symbol "X (cross)" indicates that the start-up of the application program requested to be started is rejected so that the operation of the application program which is currently in operation is continuously kept.

For example, it indicates that the start-up of the application program having the type "Default" rejected during which the application program having the type "Alarm" is being operated.

In the case where the start-up of the application program requested to be started is permitted, the operation of the application program which is currently in operation is determined by the determination unit 15 in accordance with a predetermined rule. For example, the operations include a stop of the operation, a continuation of the operation or the like. The predetermined rule has been stored in the conflict information storage unit 16. Furthermore, the predetermined rule may be included in the install data or set when the conflict resolution apparatus 10 is shipped.

In addition, to "stop" the operation of the application program is to bring the operation of said application program into a state in which the operation of said application program does not conflict with operations of other application programs. For example, this "stop" operation includes stopping alarm sound, deleting the displayed image, terminating the application program itself, or the like.

The details of the conflict information table are updated by the update unit in accordance with necessity, when a new application program is stored into the application storage unit 12. The conflict information necessary for the update is included in the install data received by the data receiving unit 11.

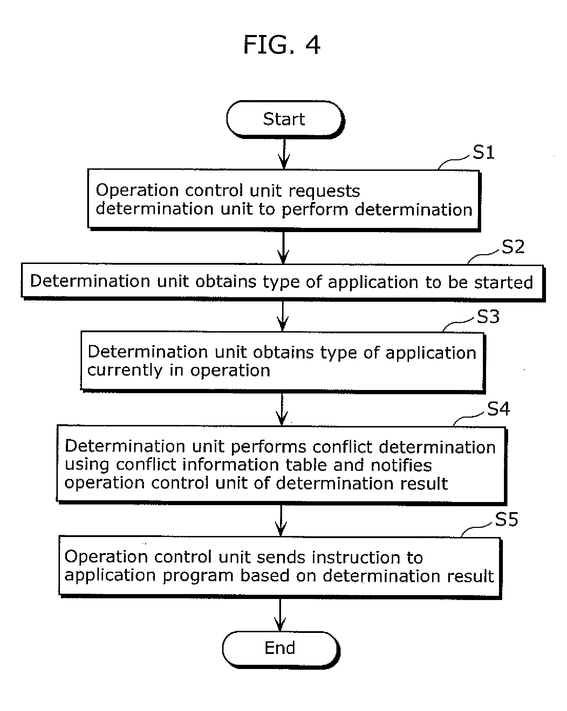

Next, the flow of conflict resolution processes performed by the conflict resolution apparatus 10 according to the first embodiment is explained with reference to the flowchart of FIG. 4.

FIG. 4 is a flowchart showing a flow of conflict resolution processes performed by the conflict resolution apparatus when starting up an application program, according to the first embodiment.

Note that, with respect to the explanation of this flowchart, it is assumed that three application programs shown in FIG. 2 have been stored in the application storage unit 12 and one of the application programs named "··· card game" is currently being operated. Furthermore, it is assumed that the conflict information table shown in FIG. 3 has been stored in the conflict information storage unit 16.

Under this assumption, it shall be explained the flow of operations starting from the time when the start-up of the application program named "··· timer" which has a higher priority level than that of the "··· card game" is requested to the time until the operation of the "··· card game" is stopped.

First, triggered by an operation of the input unit 102 by a user or a reception of specific data by the communication unit 101, the execution unit 104 requests the operation control unit 18 to perform control so as to start the "··· timer" having a higher priority level than the "··· card game" which is currently in operation.

The operation control unit 18 receives the request, and requests the determination unit 15 to determine whether or not the "... timer" can be started (S1).

The determination unit 15 analyzes the details of the request from the operation control unit 18, and recognizes that the application program requested to be started is the "··· timer". Furthermore, the determination unit 15 obtains the type "Alarm", which is the type of the "··· timer", from the type information storage unit 14 (S2).

The determination unit 15 receives the type "Alarm" of the "··· timer", and stores the received type in a predetermined storage region in the determination unit 15. The determination unit 15 further reads out operation information that is information of the application program which is currently in operation, from the operation information storage unit 17 (S3). Note that, in the case where there is no application program which is currently in operation, the determination unit 15 determines that there is no application program which is currently being operated by reading out, from the operation information storage unit 17, information indicating that no application is currently in operation, or by not being able to read out the above, and notifies the operation control unit 18 to permit the start-up of the application program requested to be started.

FIG. 5 is a diagram showing an example of a data configuration of the operation information stored in the operation information storage unit 17.

Here, the application name "··· card game" and its type "Default" have been written in the operation information storage unit 17 by the determination unit 15 in the case where the application program of "··· card game" which is currently being operated is started. Therefore, the determination unit 15 can obtain, from the operation information storage unit 17, the application name "··· card game" and its type "Default" of the application program which is currently in operation (S3).

Next, the determination unit 15 reads out the conflict information table stored in the conflict information storage unit 16. The determination unit 15 determines whether or not the application program of the "··· timer" can be started using the read out conflict information table, based on the type "Default" of the "··· card game" which is currently in operation and the type of "··· timer" which is to be started. The determination unit 15 also determines what kind of instruction to be made to each application program. Furthermore, it notifies the operation control unit 18 of the determination result including the determined items (S4).

In the conflict information table shown in FIG. 3, the symbol "O" is indicated in an intersection of a row of the type "Default" of the "··· card game" which is the type of an application currently being operated and a column of the type "Alarm" of the "··· timer" which is the type of the application to be started. In other words, the symbol "O" indicates "start permission". Accordingly, it is indicated that the "··· timer" to be started has a higher priority level than the "··· card game" which is currently in operation, so that the "··· timer" is started.

Therefore, the determination unit 15 obtains, as a determination result to start up the "··· timer" and to stop the "··· card game" for example.

Furthermore, the application program which is currently in operation is changed based on the determination result so that the determination unit 15 updates the operation information stored in the operation information storage unit 17. Specifically, the operation information is updated to the information of "··· timer". Note that, in the case where the application program which is currently in operation is terminated by an instruction of the user or the like, the operation control unit 18, which has received the information from the execution unit 104, deletes the operation information stored in the operation information storage unit 17 or updates the operation information to the information which indicates that there is no application program which is currently in operation.

The operation control unit 18 instructs to stop the operation of the "··· card game" and to permit the start-up of the operation of the "··· timer" based on the determination result notified from the determination unit 15 (S5). Specifically, the operation control unit 18 transmits these instructions to the execution unit 104, and the execution unit 104 stops the execution of the "··· card game" and starts the "··· timer" in accordance with these instructions.

Accordingly, the conflict resolution apparatus 10 can control the start-up of an application program.

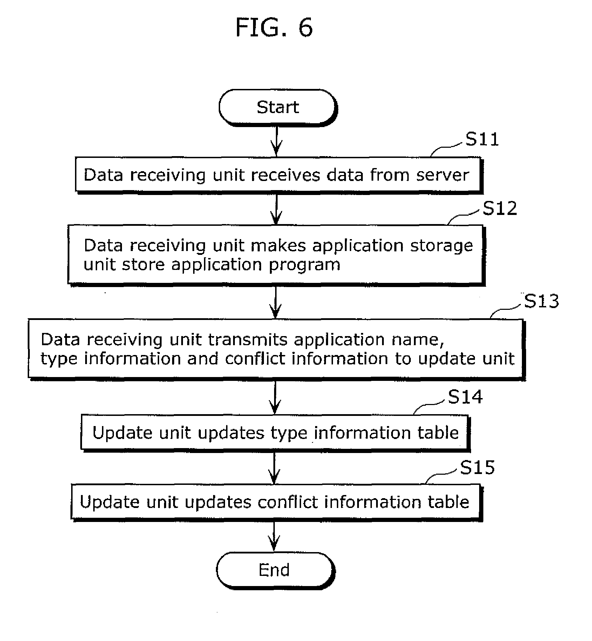

Next, it is described the flow of processes of updating the type information table and the conflict information table when an application program is installed, by the conflict resolution apparatus 10, with reference to the flowchart of FIG. 6.

FIG. 6 is a flowchart showing the flow of processes of updating the type information table and the conflict information table in the conflict resolution apparatus according to the first embodiment.

The data receiving unit 11 receives the install data transmitted from the server 21 via the network 30 (S11). The install data is transmitted to the terminal apparatus 100 by an inquiry to the server 21 triggered by an operation of the input unit 102 by a user, or by a spontaneous operation of the server 21.

FIG. 7 is a diagram showing an example of a data configuration of the install data. As shown in FIG. 7, the install data includes attribute information of the application program such as an application name, type information and conflict information, in addition to the application program.

The example in FIG. 7 shows the install data of the application program whose application name is "··· browser" and type is "Internet". Hereinafter, the description shall be made assuming the case where the data receiving unit 11 has received the installed data shown in FIG. 7.

Next, the data receiving unit 11 analyzes the received installed data, stores the application program "··· browser" into the application storage unit 12 (S12), and transmits the application name "··· browser", the type information "Internet" and the conflict information to the update unit 13 (S13).

The update unit 13, which has received the aforementioned information from the data receiving unit 11, updates the type information table stored in the type information storage unit 14 using the application name and the type information received from the data receiving unit 11 (S14). Specifically, the application name and the type information are added to the type information table in association with each other.

Furthermore, the update unit 13 refers to the conflict information table stored in the conflict information storage unit 16, and updates data in the conflict information table based on the received information when it is necessary to update the conflict information table such as in the case where a type of the application program to be additionally installed is new (S15). The data stored in the conflict information table is not updated when said type is already found in the conflict information table. In the present embodiment, the type "Internet" of the "··· browser" is new so that data in the conflict information table is updated. Hereinafter, the update of the data in the conflict information table shall be described.

FIG. 8 is a diagram showing an example of the conflict information. As shown in FIG. 8, the conflict information is information written in a predetermined markup language, and is made up of a start tag "<Conflict Info>", an end tag "</Conflict Info>", and a body portion between them. Furthermore, the conflict information table is updated in accordance with the description details in the body portion.

In the conflict information shown in FIG. 8, only "<default/>" is described in the body portion. Based on this conflict information, the conflict information table is updated in accordance with a default rule which is a predetermined rule.

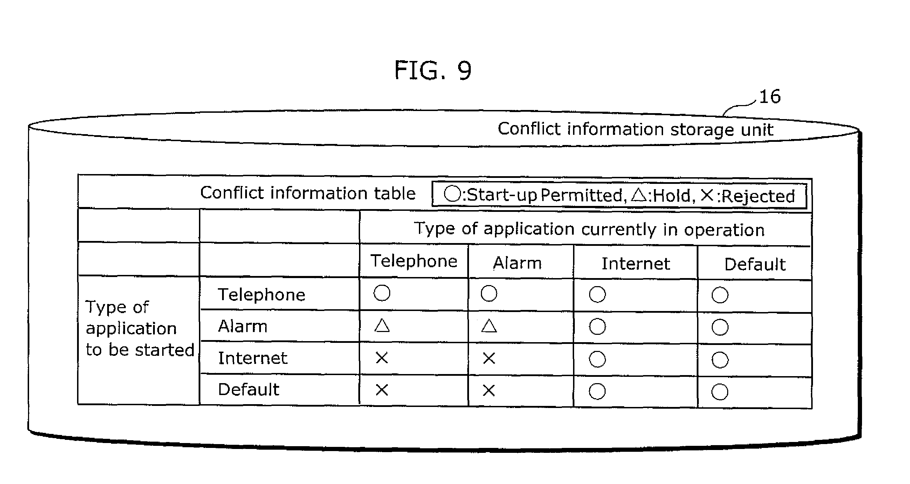

FIG. 9 is a diagram showing an example of the updated conflict information table. The conflict information table shown in FIG. 9 is an example of the updated conflict information table in which data is updated in accordance with the default rule assuming the case where the conflict information of the type "Internet" is the conflict information shown in FIG. 8. Here, conflict information table before the update is the conflict information table shown in FIG. 3.

As shown in FIG. 9, a new type "Internet" is added to the column and row of the conflict information table. As shown in FIG. 9, the default rule is a rule by which the symbol "O" is applied to all rows of the newly added type, and the symbol "X" is applied to all columns of the newly added type except the intersection of the column of the newly added type and the row of the type "Default". The update unit 13 stores the default rule in the storage region which is not shown in the diagram, and uses it for the update of the conflict information table.

Specifically, in accordance with the conflict information table shown in FIG. 9, all types of application programs are permitted to be started during which the application program with the type "Internet" is being operated. Furthermore, when the application program with the type "Internet" is requested to be started, if the application program with the type "Telephone" or "Alarm" is currently being operated, the start-up of the requested program is rejected, and if the application program with the type "Internet" or "Default" is being operated, the start-up of the requested program is permitted.

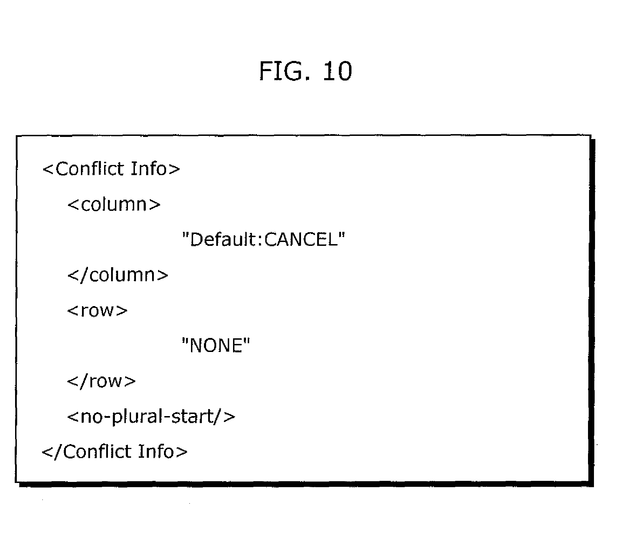

FIG. 10 is a diagram showing another example of the conflict information. The conflict information shown in FIG. 10 differs from the conflict information shown in FIG. 9 in that the conflict information shown in FIG. 10 includes, in the body portion, a column definition tag "<column></column>", the row definition tag "<row></row>", and the same type start prohibition tag "<no-plural-start/>", The default rule is corrected in accordance with the information described in the tags or the portion between the tags, and the conflict information table is updated in accordance with the corrected default rule.

In the example shown in FIG. 10, "Default: CANCEL" is described between the column definition tags of "<column>" and "</column>". This indicates that, with respect to the column, the symbol written in a portion which intersects with "Default" is corrected to "X". Furthermore, "NONE" is described between the row definition tags of "<row>" and "</row>". This indicates that the default rule is adopted without making any correction in the rows. Furthermore, the same type start prohibition tag "<no-plural-start/>" indicates that the start-up of an application program which is requested to be started is rejected in the case
where the type of the application program which is currently in operation and the type of the application program which is requested to be started match with each other being the new type which corresponds to the conflict information.

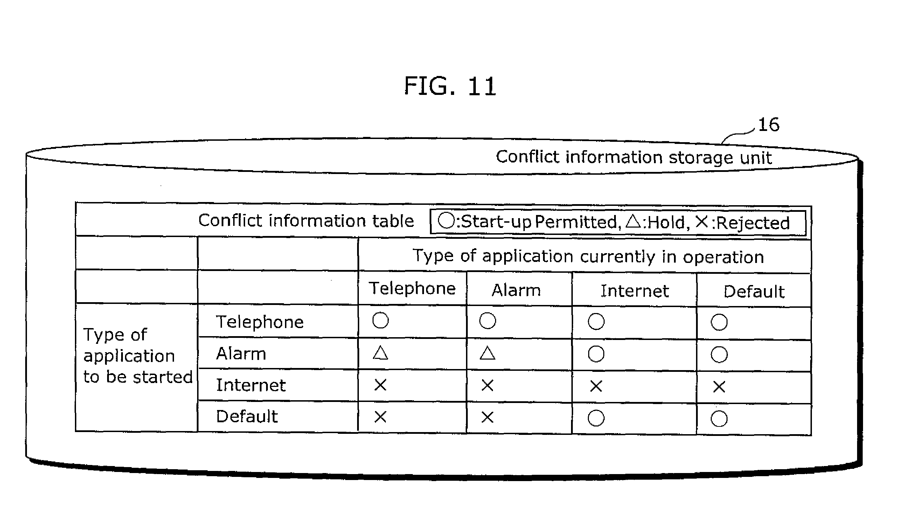

FIG. 11 is a diagram showing another example of the updated conflict information table. The conflict information table shown in FIG. 11 shows an example of the conflict information table in which data is updated in accordance with the corrected default rule assuming that the conflict information of the type "Internet" is the conflict information shown in FIG. 10. Note that the conflict information before the update is the conflict information table shown in FIG. 3.

As shown in FIG. 11, the new type "Internet" is added to the column and row of the conflict information table. Furthermore, the default rule which is corrected in accordance with the conflict information shown in FIG. 10 is applied to the added type.

Specifically, this conflict information table is different from the conflict information table shown in FIG. 9 to which the default rule is adopted as it is. In this conflict information table, a symbol "X" is indicated in the intersection between the column of the type "Internet" and the row of the type "Default", and a symbol "X" is also indicated in the intersection between the column of the type "Internet" and the row of the type "Internet".

Thus, the conflict information is information indicating a priority level of an application program of a type, and includes difference information with the default rule in the present embodiment. Based on the default rule and its difference information, the update unit 13 updates the conflict information table stored in the conflict information storage unit 16.

It should be noted that, as described in the above, no addition is made with respect to the types that have already existed in the conflict information table. Furthermore, the conflict information is determined by a provider of each application program.

As described in the above, in the case where an application program is requested to be started, the conflict resolution apparatus 10 of the first embodiment can determine whether or not to start the application program based on the conflict information table. Additionally, it can also determine the operation of the application program which is currently in operation. Furthermore, in the case where a new application program is installed, this conflict information table is updated based on the conflict information which is information unique to the type of said application program.

Accordingly, it is not necessary to predict an application program to be installed before the conflict resolution apparatus 10 is shipped to as a product, and to previously store a large amount of conflict information. Furthermore, even in the case where an unexpected application program is installed, the operation of the unexpected application program such as start can be appropriately controlled using a type of the application program which is the attribute information of the unexpected application program. Furthermore, in the case where the type of the new application program does not exist in the conflict information table, only the update of the conflict information table is required.

Accordingly, even in the case where the new application program is installed, the entire system does not need to be updated so that the operation can be controlled in a manner that the plural application programs do not conflict with each other by updating only the conflict information table. Furthermore, the conflict information table does not need to previously hold a large amount of information so that the table can be kept in a minimum and optimum state which is required. Consequently, the storage area necessary for storing the conflict information table can be reduced.

Note that, in the first embodiment, it has been explained that an application program is a program to be stored into the application storage unit 12 and executed. However, the program to be stored into the application storage unit 12 and executed does not need to be the application program which is a program for providing a service directly to the user, and may be a software program such as a middleware program which operates in response to a request from the application program.

Furthermore, the description language for the program to be stored into the application storage unit 12 and executed is not restricted. For example, the program may be described in JAVA^{™}, C, C++, or the like. Furthermore, in accordance with the language used for the program and the like, a JaVa Virtual Machine (JVM), a K Virtual Machine (KVM), a Binary Runtime Environment for Wireless (BREW) or the like may be adopted as the execution environment of the program.

In other words, with respect to the conflict resolution apparatus 10, the characteristic features of the conflict resolution apparatus 10 are not deteriorated depending on a language and the like of the program to be controlled for its operation. The language and execution environment of the program to be executed by the system may be determined in accordance with a use purpose of the system which uses the conflict resolution apparatus 10 or a user's request.

Furthermore, upon receiving a determination request from the operation control unit 18, the determination unit 15 reads out, from the operation information storage unit 17, the operation information which is information of the application program that is currently in operation. However, the determination unit 15 may previously retain the information regarding whether or not there is an application program which is currently in operation, and read out the operation information only in the case where there is an application program which is currently in operation.

Here, the determination unit 15 determines the conflict determination based on the type of the application program. However, the information used by the determination unit 15 for the conflict determination is not restricted only to the type of the application program. For example, any attribute information indicating an attribute of the application program such as a type of a resource to be used and the like may be used.

Furthermore, the conflict determination may be performed based on the information such as the number of resources used by the application program, an execution time, a use time of the resources and the like which are measured previously. Specifically, the determination unit 15 may determine how to resolve conflicts among the plural application programs based on the aforementioned information. Accordingly, for example, it can be prevented a specific application program from keeping using the resources and dominating the many resources.

Note that, a method of using the type of a resource of an application program which is a target for conflict determination shall be explained in the following second embodiment.

Furthermore, although it has been explained that the determination unit 15 performs conflict determination on a single application program which is currently in operation, in the case
where plural application programs are currently in operation, it may perform conflict determination between the application program which is requested to be started and the plural application programs which are currently in operation. Even in the case where plural application programs are targets for conflict resolution, the operation information storage unit 17 only needs to store the information regarding the plural application programs that are currently in operation, and the determination unit 15 therefore can sequentially perform conflict resolution on the plural application programs. In other words, this can be realized with the structure of the aforementioned conflict resolution apparatus 10.

Furthermore, it has been explained that, upon receiving the conflict information of a type from the data receiving unit 11, the update unit 13 does not update the conflict information table in the case where said type is already found in the conflict information table. However, the update unit 13 may perform the update at any time. Even in such case, only the same information is written over the pre-existing information. Furthermore, the update unit 13 does not need to examine the conflict information table before the update so that the operations to be performed by the update unit 13 can be reduced.

Note that, although it has been explained that the data receiving unit 11 communicates with the server 21 via the communication unit 101 and the network 30 as shown in FIG. 1, the data receiving unit 11 may be simply connected to the server 21 through cable. Furthermore, it may communicate using a wireless method defined in the Infrared Data Association (IrDA) instead of a wired communication. Also, the information may be obtained using an external medium such as a Compact Disk Read Only Memory (CD-ROM) without using a communication means such as a network. In other words, the path and means to reach the data receiving unit 11 are not restricted as long as the conflict resolution apparatus 10 can obtain data necessary for the conflict determination.

Furthermore, the type information storage unit 14 and the conflict information storage unit 16 do not need to be fixed inside the conflict resolution apparatus 10. For example, an external memory which is removable from the conflict resolution apparatus 10 may be used as the type information storage unit 14 or the conflict information storage unit 16. With this structure, for example, the back-up of the type information table or conflict information table can be stored into another recording medium via the external memory. Furthermore, by placing, in the conflict resolution apparatus 10, the external memory in which the type information table or the conflict information table into which plural pieces of new information are added are stored, the added new plural pieces of information can be taken collectively into the conflict resolution apparatus 10. Accordingly, the number of application programs whose conflicts can be resolved can be increased in a short period of time.

Furthermore, it is not restricted only that the determination unit 15 always accesses to the type information storage unit 14 and obtains information when performing conflict determination. For example, the determination unit 15 firstly accesses the operation information storage unit 17, and in the case where there is no application program which is currently in operation, it may notify the operation control unit 18 of the permission to start the application program which is requested to be started without performing conflict determination.

Furthermore, although it has been explained that the determination unit 15 obtains all pieces of the operation information from the operation information storage unit 17 for the conflict determination, the determination unit 15 may obtain only the application name of the application which is currently in operation included in the operation information, for example. In this case, the determination unit 15 may obtain the type which corresponds to the obtained application name from the type information storage unit 14.

Note that, it has been explained that the install data includes an application program and the conflict information and the data receiving unit 11 receives the application program together with the conflict information. However, the data receiving unit 11 may separately receive the application program and the conflict information. In the case where an application program is received, it is only necessary that conflict information for controlling an operation of the application program is reflected in the conflict information table before the application program is started up.

Furthermore, although it has been explained that the conflict information table specifies whether or not the start-up of an application program to be started can be permitted, depending on a type of the application program, this judgment may be determined based on a different basis. For example, a value indicating an absolute priority level of each application program may be stored in the conflict information storage unit 16 and, depending on a value in number, whether or not operations such as start or stop of two application programs can be performed may be determined based on the values. In this case, there is a possible case where priority levels of the two application programs are the same based on the features and functions for their operations. A rule may be determined previously for such case, and in the case where such case occurs, the rule may be followed.

Furthermore, in the case where the determination unit 15 determines the termination of the application program which is currently in operation, the information regarding such case may be stored in a predetermined storage region. Accordingly, for example, in the case where the application program which is permitted to be started is terminated by the determination unit 15, the application program which has been stopped because of the determination made by the determination unit can be restarted.

Furthermore, in the case where there are plural application programs that are terminated during their operations, an application program with the highest priority level from among the plural application programs may be started up after the operation of the application program which is permitted to be started is terminated by the determination unit 15.

Furthermore, whereas, in the description about the operation of the conflict resolution apparatus 10 with reference to the flowchart of FIG. 4, it has been explained the example of starting up the application program "··· timer" with the highest priority level later, the reverse case may be applied. In other words, the conflict resolution apparatus 10 performs operation in accordance with the conflict information table shown in FIG. 3, even in the case where the application program "··· card game" with the lowest priority level is started later. Specifically, as shown in FIG. 3, the start-up of "··· card game" is rejected.

Furthermore, it has been explained that, in the case where the application program which is currently in operation is changed based on the determination result made by the determination unit 15, the determination unit 15 updates the operation information stored in the operation information storage unit 17. However, the operation control unit 18 may update the operation information based on the determination result received from the determination unit 15.

Furthermore, conflict determination may be performed on the application program when the application program is terminated. In this case, for example, information which indicates "··· application is terminated" may be transmitted to the operation control unit 18 as the determination result. With this information, the operation control unit 18 may perform control such as resolving a restriction on the application program whose operation is restricted in order to avoid a conflict.

In addition, it has been described that the server 21 has a supply data storage unit 22 for storing install data to be transmitted to the terminal apparatus 100. However, it does not need to have the supply data storage unit 22. For example, the install data may be stored in recording mediums such as an externally equipped hard disk and a ROM which are connected to the server 21.

### (Second Embodiment)

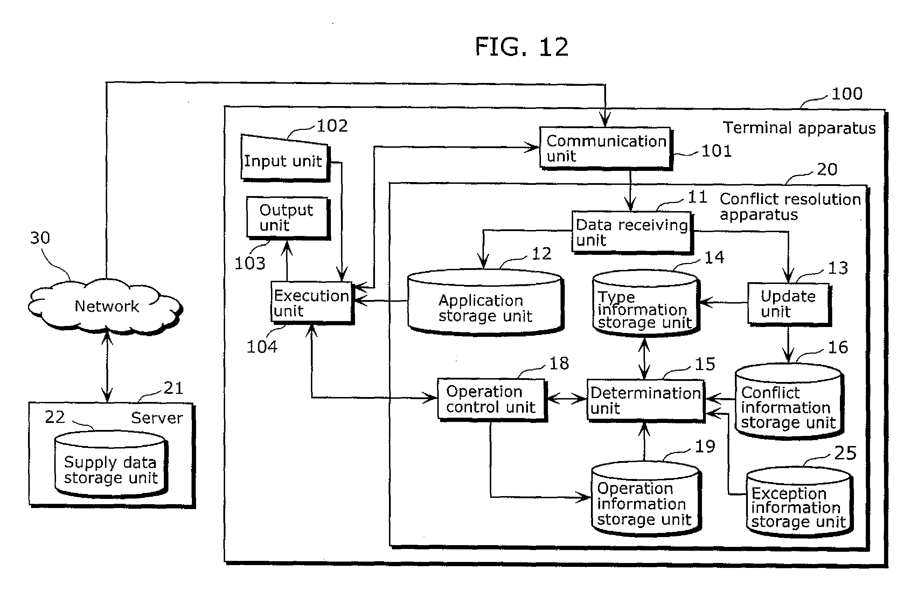

FIG. 12 is a diagram showing a configuration of an entire system including a conflict resolution apparatus according to the second embodiment of the present invention. In FIG. 12, same reference numbers are used for the same constituents as in FIG. 1 and the explanations about the same constituents are omitted.

In the present embodiment, the conflict resolution apparatus 20 has an exception information storage unit 25 in addition to the constituent elements included in the conflict resolution apparatus 10 of the first embodiment shown in FIG. 1. Furthermore, the operation information storage unit 19 can store information which identifies a resource used by an application program which is currently in operation, in addition to the details held by the operation information storage unit 17 in the conflict resolution apparatus 10 of the first embodiment.

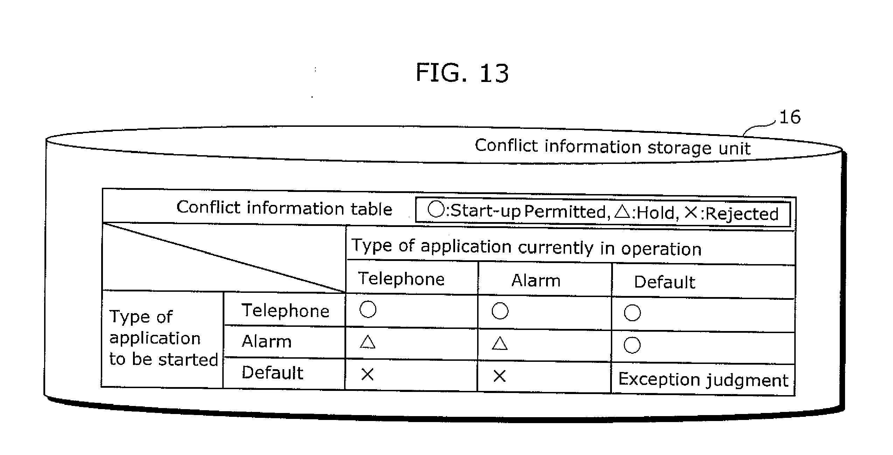

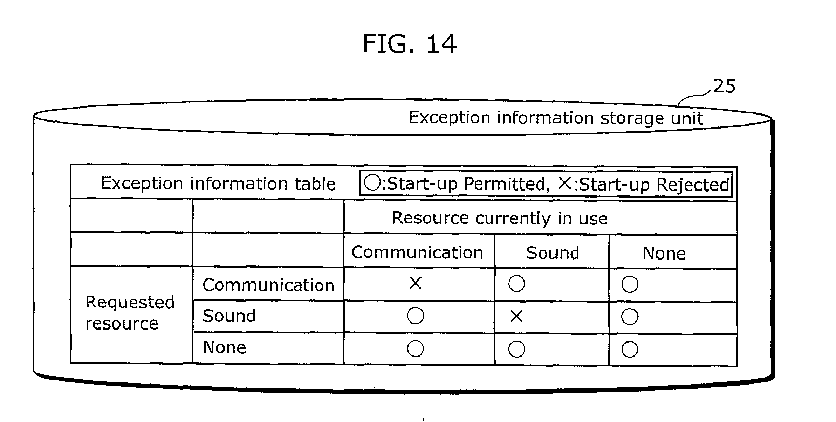

The exception information storage unit 25 is a storage device for storing the exception information table which is used when the conflict determination process cannot be performed with the information stored in the conflict information storage unit 16. It should be noted that the exception information table is an example of the second determination table for the conflict resolution apparatus of the present invention and the exception information storage unit 25 is an example of the second determination table storage unit in the conflict resolution apparatus of the present invention. The exception information table shall be described with reference to FIG. 13 and FIG. 14.

FIG. 13 is a diagram showing an example of the conflict information table for the conflict resolution apparatus 20 of the second embodiment. In the conflict information table in FIG. 13, "Exception determination" is indicated in the intersection between the type "Default" of the application which is currently in operation and the type "Default" of the application to be started. This indicates that only the type of each application program cannot determine whether or not the start-up of the application program to be started can be started. In this case, the conflict determination process is performed using the exception information table stored in the exception information storage unit 25.

FIG. 14 is a diagram showing an example of a data configuration of the exception information table. With the exception information table shown in FIG. 14, it can be determined whether or not the start-up of the application program to be started can be permitted, depending on resources used by the application program which is currently in operation and application program to be started. The information indicating resources used by each application program is an example of a second attribute in the conflict resolution apparatus of the present invention.

It should be noted that, in the diagram, "Resource in use" indicates a resource which is being used by the application program which is currently in operation, and "Requested resource" is a resource to be used firstly after the application program to be started is started.

Furthermore, in the diagram, "Communication" is a resource name which indicates a specific resource having a communication function necessary for communicating with the server 21 and the like, and "Sound" is a resource name which indicates a specific resource having a function of generating sound.

In addition, in the diagram, "None" indicates that a resource being a basis for conflict determination is not used or that such resource is not used after the application program to be started is started.

Based on the exception information table, for example, in the case where the same resource cannot be used at the same time, the start-up of a new application program which uses the resource, which is currently in use, cannot be permitted.

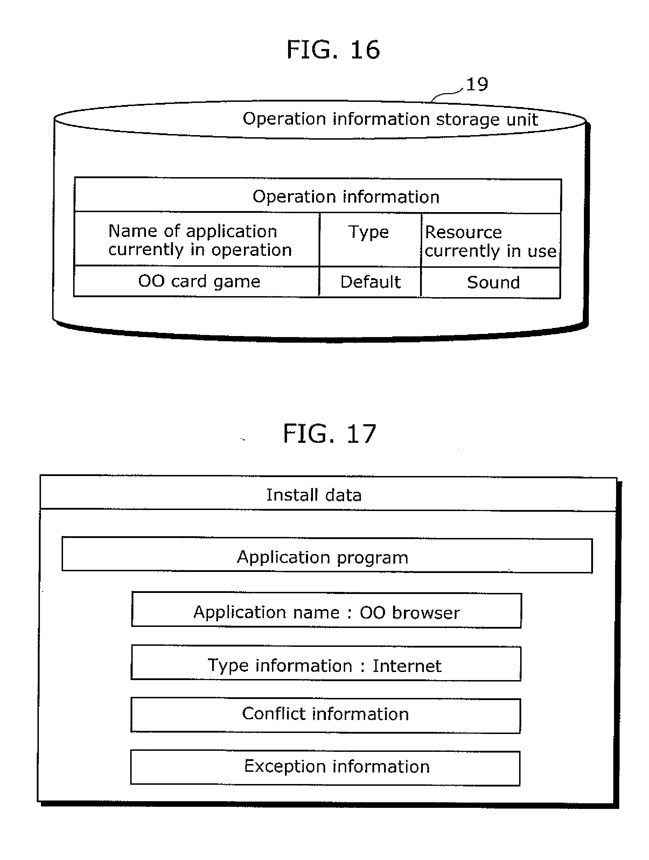

Note that, the exception information table is updated based on the exception information, which is transmitted together with the application program so as to be included in the install data. The exception information and the update of the exception information table shall be described later with reference to FIG. 17 to FIG. 19.

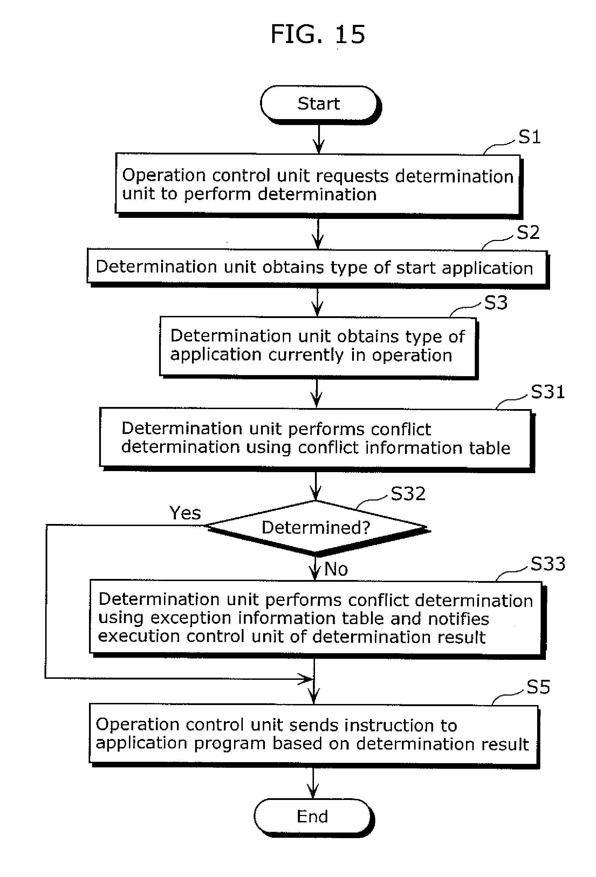

Next, the flow of processes for the conflict resolution performed by the conflict resolution apparatus 20 according to the second embodiment shall be described with reference to the flowchart of FIG. 15.

FIG. 15 is a flowchart showing the flow of processes for the conflict resolution which is performed when the conflict resolution apparatus 20 starts up an application program according to the second embodiment.

In the flowchart shown in FIG. 15, the operations from the operation of requesting the determination unit 15 to perform conflict determination by the operation control unit 18 (S1) to the operation of obtaining a type of the application program which is currently in operation by the determination unit 15 (S3) are the same operations described in the flowchart of FIG. 4.

After obtaining the type of the application program (S3), the determination unit 15 performs conflict determination using the conflict information table stored in the conflict information storage unit 16, based on the type of the application program which is currently in operation and the type of the application program to be started (S31).

As shown in FIG. 13, whereas same symbols are shown in the conflict information table of the present embodiment as in the case of the first embodiment, "Exception determination" is indicated in an intersection between the row of "Default" and the column of "Default".

In the present embodiment, the determination unit 15 can obtain a determination result based on the conflict information table, and determines whether or not it is necessary to access the exception information storage unit 25 depending on the result of determining whether or not an operation of each application program can be determined (S32).

In the case where the determination result is obtained based on the conflict information table (Yes in S32), there is no need to access the exception information, and therefore the determination result is notified to the operation control unit 18. The operation control unit 18 sends an instruction to control the operation of the application program to the execution unit 104 (S5).

On the other hand, in the case where the determination result cannot be obtained (No in S32), the determination unit 15 reads out the exception information table from the exception information storage unit 25, and performs conflict determination (S33).

At this point, a program name and type of the application program which is currently in operation and a resource name indicating a resource which is currently in use are written in the operation information storage unit 19 by the determination unit 15 and the operation control unit 18.

FIG. 16 is a diagram showing an example of a data configuration of the operation information stored in the operation information storage unit 19 according to the second embodiment. Furthermore, FIG. 16 shows an example of the operation information in the case where an application program "··· card game" is currently in operation.

As shown in FIG. 16, an application name and a type of the application as in the case of the operation information in the first embodiment are stored in the operation information storage unit 19. In addition, a resource in use is stored. The resource in use is a name indicating a resource which is currently being used by the application program which is currently in operation, and is the information to be written onto the operation information storage unit 19 by the operation control unit 18 based on the information notified from the execution unit 104. The operation control unit 18 updates the operation information, for example, in one of the following cases and the like: in the case where the resource used by the application program is changed; in the case where the use of a resource is started while an application program is being operated; and in the case where the use of the resource is stopped.

In the example of the operation information shown in FIG. 16, it is indicated that the application program "··· card game" with the type "Default" is currently in operation and a resource "Sound" is being used.

The determination unit 15 also obtains a name of the resource used by the application program to be started. Specifically, the execution unit 104 obtains, from an application program which is requested to be started, a resource name of a resource to be used firstly after the application program is started, in response to the request by the operation control unit 18. The obtained resource name is sent to the operation control unit 18.

The determination unit 15 determines whether or not the start-up of the application program to be started can be permitted using the exception determination table based on the resource name of the resource which is currently being used and the resource name of the resource which is to be used firstly by the application program to be started after said application program is started.

For example, in the case where the resource "Sound" is currently being used by the application program which is currently in operation, the start-up of the application program to be started is permitted because the symbol on the exception determination table is "O" when the resource which is firstly used by the application program to be started is the resource "Communication".

The determination unit 15 notifies the operation control unit 18 of the determination result, and transmits, to the execution unit 104, an instruction for controlling an operation of each application program in accordance with the determination result (S5).

As described in the above, according to the present embodiment, the determination unit 15 can perform conflict determination using the exception information table stored in the exception information storage unit 25, when not being able to determine whether or not the start-up of the application program to be started can be permitted using the conflict information table stored in the conflict information storage unit 16.

Here, the install data received by the conflict resolution apparatus 20 of the present embodiment from the server 21 includes exception information as described in the above.

FIG. 17 is a diagram showing an example of the data configuration of the install data according to the second embodiment.

As shown in FIG. 17, exception information is included in addition to the information included in the install data according to the first embodiment.

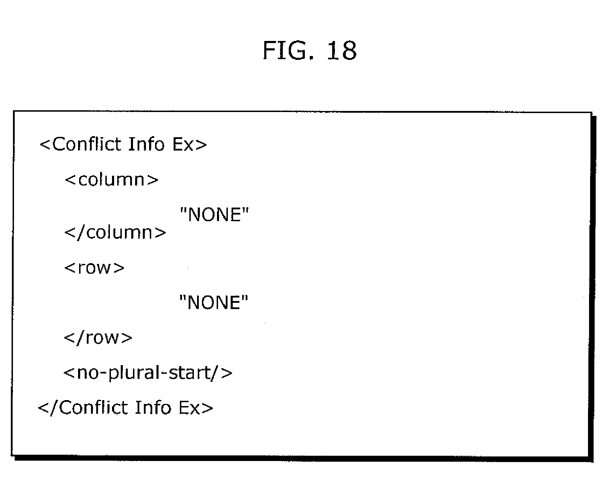

FIG. 18 is a diagram showing an example of the exception information. As shown in FIG. 18, the exception information is information written in a predetermined mark-up language as similar to the conflict information (refer to FIG. 8 and FIG. 10), which is made up of a start tag "<Conflict Info Ex>", an end tag "</Conflict Info Ex>", and a body portion which is between the start and end tags. Furthermore, the exception information table is updated in accordance with the description details in the body portion. Note that, another example of the priority level information in the conflict resolution apparatus of the present invention is made up of conflict information and exception information.

Furthermore, as in the case of updating the conflict information table, a default rule is previously determined for updating the exception information table. Here, the exception information has difference information indicating a difference with the default rule. The default rule for updating the exception information table is the same as "None" in the exception information table shown in FIG. 14, which is the rule to make indications in all of the columns and rows to be added as "O".

Each tag described in the body portion of the exception information shown in FIG. 18 indicates correction details of the default rule. Specifically, "NONE" is described between the column definition tags "<column>" and "</column>" and between the row definition tags "<row>" and "</row>". Thus, it is indicated that the default rule is applied to both added columns and rows. Furthermore, since the same type start prohibition tag "<no-plural-start/>" is described, it is indicated that the intersection with the added resource names is corrected to "X".

For example, it is assumed that the exception information shown in FIG. 18 is received by the data receiving unit 11 together with a new application program. Furthermore, it is assumed that the new application program is an application program using a "Camera" resource which is a resource having a digital camera function. Note that, the information indicating a resource for use with the application program is held by the application program itself and the information is obtained by the data receiving unit 11 and sent to the updating unit 13 together with the exception information.

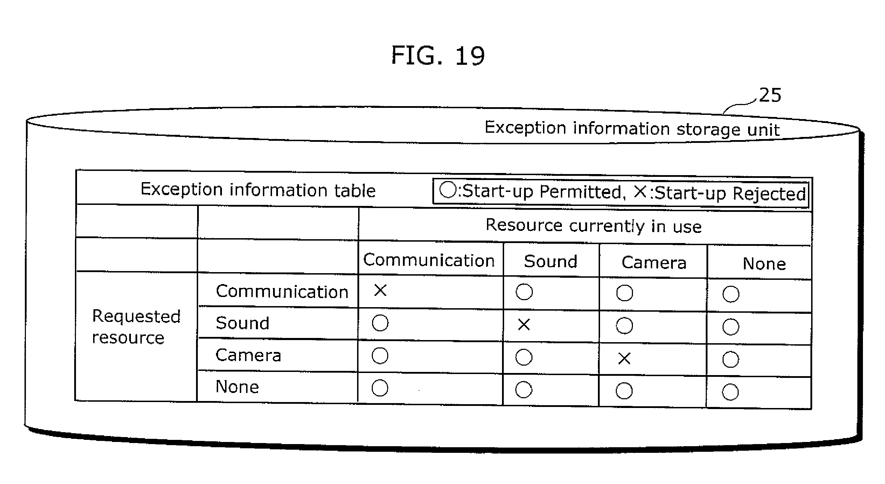

Accordingly, under these assumptions, the exception information shown in FIG. 18 is exception information regarding the camera resource. The result of updating the exception information table shown in FIG. 14 using such exception information by the updating unit 13 is the exception information table shown in FIG. 19.

FIG. 19 is a diagram showing an example of a data configuration in the updated exception information table.

As shown in FIG. 19, in addition to the details of the exception information table shown in FIG. 14, "Camera" is added to a column and a row. Furthermore, based on the exception information, "X" is indicated in the intersection between the column "Camera" and the row "Camera". In other words, it is indicated that, in the case where the application program which is currently in operation uses a camera resource, the start-up of the application program which uses the camera resource firstly after being started is not permitted.

Note that, the resources that are already found in the exception information table are not added. Furthermore, the exception information is determined by a provider of each application program.

Thus, with the use of the exception information table, even in the case of the application programs whose start cannot be determined based on the conflict information table using an application type as a basis for determination, the start-up of the application programs can be determined based on the resources used by the respective application program as another basis for determination. Furthermore, in the case where an application program is newly installed, the exception information table can be updated. Accordingly, the exception information table can be applied to various application programs without holding a large amount of information.

Note that, although it has been explained in the present embodiment that the determination unit 15 performs determination firstly using the conflict information table and then using the exception information table, the order of using these tables may be in reverse order. Specifically, in the case where conflict judgment is not performed based on the resources of the respective applications, the conflict determination may be performed based on the types used by the respective applications. Furthermore, the conflict determination may be performed with the information in both of the tables.

Furthermore, although it has been explained about the example of using only one exception information table, the exception information table may be double-tier tables or triple-tier tables. Specifically, in the case where the conflict determination is not performed based on single exception information table, conflict determination may be performed based on another basis. Said another basis is, for example, attribute information of each application program such as size of a memory required for the operation of the application program.

Furthermore, the determination unit 15 may use the exception information table, even in the case where the conflict determination can be performed only based on the conflict information table. For example, as a result of the conflict determination based on the conflict information table, if it is determined that plural application programs are to be operated, the determination unit 15 may determine whether or not resources of the plural application programs conflict with each other, using the exception information table. Based on the determination result, the operation control unit 18 may control resources which are in conflict.

It should be noted that only the operation of the conflict resolution apparatus in the case where the application program is newly installed has been explained in the aforementioned first and second embodiment. However, in the case where an application program is deleted, the update unit 13 may perform processing along with such deletion.

For example, the update unit 13 may perform update processing of deleting information, which becomes unnecessary when the application program is deleted, from the type information storage unit 14, the conflict information storage unit 16 and the exception information storage unit 25. In this case, the data receiving unit 11 having a function of storing the application program into the application storage unit 12 may perform deletion of the application program. Furthermore, the update unit 13 may detect an application program to be deleted from the application storage unit 12, and specify information which becomes unnecessary, via the data receiving unit 11. Accordingly, the data receiving unit 11 realizes a function of deleting a program, which is performed by the deletion unit in the conflict resolution apparatus in the present invention.

Furthermore, although while it has been explained that the conflict information is included in the install data, in the case where the conflict information is not included, the conflict information table may be updated as necessary, for example, by applying a default rule for updating the conflict information table. It also applies to the case of the exception information in the second embodiment. In the case where the exception information is not included in the installed data, the exception information table may be updated as necessary by applying a default rule for updating the exception information table.

Furthermore, the application program and conflict information included in the installed data may be encrypted. In this case, the encrypted application program and conflict information is decrypted as necessary, and only when the encrypted application program and conflict information can be decrypted, the decrypted application program and the conflict information may be installed.

On the other hand, in the case where decryption is failed, the application program and the like may be installed as an application program having the lowest priority level. For example, the conflict information or exception information relating to the application program may be dealt with as information indicating the lowest priority level.

Furthermore, in the case where the conflict information to be installed is damaged or unreliable, the installation of the application program itself may not be performed.

Accordingly, by increasing the reliability of the information to be installed, for example, it is possible to avoid an unauthorized application program from unexpectedly and arbitrarily changing the conflict information so as to control the priority level by itself.

Furthermore, the exception information storage unit 25 is not necessarily placed inside the conflict resolution apparatus 200. For example, an external memory which is removable from the conflict resolution apparatus 20 may be used as the exception information storage unit 25. Consequently, for example, the back-up of the exception information table may be stored into another storage medium using the external memory. Furthermore, the exception information table which includes increased amount of useful information can be taken into the conflict resolution apparatus 10 by equipping, to the conflict resolution apparatus 10, the external memory for storing the exception information table in which data is updated based on plural pieces of new exception information. Accordingly, the number of application programs whose conflicts can be resolved can be increased in a short period of time.

Furthermore, although it has been described that the conflict information and the exception information are determined by a provider of each application program, these information may be determined by a user. In other words, the user may be allowed to edit the conflict information table and the exception information table.

In this case, the normal operation of the system can be assured by prohibiting the user from changing a rule which is the least necessary for the operation of a system in which the conflict resolution apparatus is included. For example, the rule may define the application program having the type "Telephone" to have the highest priority level.

Furthermore, it has been described that the conflict information and the exception information are difference information with default rules of respective conflict information and the exception information. However, they do not need to be the difference information and may include all the necessary information.

Furthermore, it has been described, in the first and second embodiments, the operations of the conflict resolution apparatus 10 or the conflict resolution apparatus 20 when the conflict resolution apparatus 10 or the conflict resolution apparatus 20 is included in the terminal apparatus 100. However, for example, the conflict resolution apparatus 10 may include the execution unit 104 and the like of the terminal apparatus 100 and solely perform communication with the server 21. In other words, the conflict resolution apparatus of the present invention can also function as a portion of a system and as an independent apparatus.

### Industrial Applicability

The conflict resolution apparatus according to the present invention is characterized in that the conflict information table which indicates information representing conflict relationship among application programs can be actively updated and the conflict information table can be maintained in an optimal size. Accordingly, the present invention is useful as a built-in device such as a cellular phone, a digital TV, a PDA, a mobile device and the like. Furthermore, the present invention is applicable for conflict resolution of application programs in a personal computer.

## Claims

1. A conflict resolution apparatus which resolves a conflict between programs, said apparatus comprising:
a first determination table storage unit for storing a first determination table indicating a conflict relationship according to a combination of first attributes of the programs;
a priority level information receiving unit operable to receive priority level information indicating a priority level of each program, the priority level being specified by the first attribute of the program;
an update unit operable to update the first determination table stored in said first determination table storage unit, using the priority level information received by said priority level information receiving unit;
a determination unit operable to determine whether or not to permit start-up of a program to be started, using the first determination table updated by said update unit, based on a combination of a first attribute of the program to be started and a first attribute of a program which is currently in operation; and
a control unit operable to control an operation of the program which is currently in operation or an operation of the program to be started, according to a determination result obtained by said determination unit.

2. The conflict resolution apparatus according to Claim 1,
wherein the first determination table has information which indicates one of a start-up permission, a start-up on hold, and a start-up rejection to be selected for the program to be started, according to the combination of the first attribute of the program to be started and the first attribute of the program which is currently in operation,
said determination unit is operable to determine whether or not to permit the start-up of the program to be started, by selecting one of the start-up permission, the start-up on hold, and the start-up rejection for the program to be started, and
in the case where the start-up on hold is selected by said determination unit, said control unit is operable to perform control for starting up the program which is requested to be started, after the operation of the program which is currently in operation is stopped.

3. The conflict resolution apparatus according to Claim 1,
wherein said control unit is operable to perform control for stopping the operation of the program which is currently in operation while performing control for starting up the program to be started, in the case where said determination unit determines that the start-up of the program to be started is permitted.

4. The conflict resolution apparatus according to Claim 1 further comprising:
a program receiving unit operable to receive a program;
an attribute information obtaining unit operable to obtain attribute information indicating a first attribute of the program received by said program receiving unit; and
an attribute information storage unit for storing the attribute information obtained by said attribute information obtaining unit,
wherein said update unit is further operable to: i) store the attribute information into said attribute information storage unit in the case where the attribute information is obtained by said attribute information obtaining unit; and ii) store information which is previously defined as the attribute information into said attribute information storage unit in the case where the program is received by said program receiving unit and the attribute information is not obtained by said attribute information obtaining unit,
the program to be started is the program received by said program receiving unit, and
said determination unit is operable to determine whether or not to permit start-up of the program to be started using the first determination table updated by said update unit, based on the attribute information of the program to be started and attribute information of the program which is currently in operation that are stored in said attribute information storage unit.

5. The conflict resolution apparatus according to Claim 4 further comprising:
a program storage unit for storing the program received by said program receiving unit; and
a deletion unit operable to delete a program from said program storage unit,
wherein said update unit is further operable to delete attribute information corresponding to the program deleted by said deletion unit, or to update the first determination table stored in said first determination table storage unit based on the attribute information corresponding to the program deleted by said deletion unit.

6. The conflict resolution apparatus according to Claim 1 further comprising
a second determination table storage unit for storing a second determination table indicating a conflict relationship according to a combination of second attributes of the programs,
wherein the priority level information further includes information indicating a priority level of each program, the priority level being specified by the second attribute of the program,
said update unit is further operable to update the second determination table stored in said second determination table storage unit, using the priority level information received by said priority level information receiving unit, and
said determination unit is further operable to determine whether or not to permit start-up of the program to be started using the second determination table updated by said update unit, based on a combination of the second attribute of the program to be started and the second attribute of the program which is currently in operation, and to determine whether or not to permit the start-up of the program to be started, based on a determination result of determining whether or not to permit the start-up of the program to be started using the first determination table and a determination result of determining whether or not to permit the start-up of the program to be started using the second determination table.

7. The conflict resolution apparatus according to Claim 6,
wherein said determination unit is operable to determine whether or not to permit the start-up of the program to be started using the second determination table, when not being able to determine whether or not to permit the start-up of the program to be started using the first determination table.

8. The conflict resolution apparatus according to Claim 6,
wherein the first attribute is a type of a program,
the first determination table is information indicating permission or rejection for the start-up of the program to be started according to a combination of a type of the program to be started and a type of the program which is currently in operation,
the second attribute is a resource used by a program, and
the second determination table is information indicating permission or rejection for the start-up of the program to be started according to a combination of a resource used by the program to be started and a resource used by the program which is currently in operation.

9. The conflict resolution apparatus according to Claim 6,
wherein said second determination table storage unit is a recording medium which is removable from said conflict resolution apparatus.

10. The conflict resolution apparatus according to Claim 1,
wherein said first determination table storage unit is a recording medium which is removable from said conflict resolution apparatus.

11. A conflict resolution method for resolving a conflict between programs, said method comprising:
a storage step of storing a first determination table indicating a conflict relationship according to a combination of first attributes of the programs, into a first determination table storage unit;
a receiving step of receiving priority level information indicating a priority level of each program, the priority level being specified by the first attribute of the program;
an update step of updating the first determination table stored in the first determination table storage unit, using the priority level information received in said receiving step;
a determination step of determining whether or not to permit start-up of a program to be started, using the first determination table updated in said update step, based on a combination of a first attribute of the program to be started and a first attribute of a program which is currently in operation; and
a control step of controlling an operation of the program which is currently in operation or an operation of the program to be started, according to a determination result obtained in said determination step.

12. A conflict resolution program for resolving a conflict between programs, said program causing a computer to execute:
a storage step of storing a first determination table indicating a conflict relationship according to a combination of first attributes of the programs, into a first determination table storage unit;
a receiving step of receiving priority level information indicating a priority level of each program, the priority level being specified by the first attribute of the program;
an update step of updating the first determination table stored in the first determination table storage unit, using the priority level information received in said receiving step;
a determination step of determining whether or not to permit start-up of a program to be started, using the first determination table updated in said update step, based on a combination of a first attribute of the program to be started and a first attribute of a program which is currently in operation; and
a control step of controlling an operation of the program which is currently in operation or an operation of the program to be started, according to a determination result obtained in said determination step.
